# EUROPEAN PATENT SPECIFICATION

(11) **EP 4 614 055 B1**
(45) Date of publication and mention of the grant of the patent: **17.06.2026**
(21) Application number: 25161853.4
(22) Date of filing: 05.03.2025
(51) Int. Cl.: F17C 5/00

(54) **FILLING NOZZLE**
FÜLLSTUTZEN
BUSE DE REMPLISSAGE

(30) Priority: 06.03.2024 JP 2024033554
(43) Date of publication of application: 10.09.2025
(73) Proprietor: Tatsuno Corporation, Tokyo 108-0073 (JP)
(72) Inventor: OMORI, Kento, Tokyo 108-0073 (JP); OKAMURA, Tatsuya, Tokyo 108-0073 (JP); MATSUMOTO, Akihiro, Tokyo 108-0073 (JP); OUCHI, Toshihiko, Tokyo 108-0073 (JP)
(74) Representative: Isarpatent

(56) References cited:
- JP-B2- 6 516 207
- JP-B2- 6 558 643
- US-A1- 2020 386 368
- US-B2- 11 073 244

## Description

### BACKGROUND

### 1. Field of the Invention

The present invention relates to a filling nozzle for filling gaseous fuel such as hydrogen gas.

### 2. Description of the Related Art

Regarding the above filling nozzle, in order to prevent deterioration of seal structures and reduce the possibility of hydrogen gas leakage, the applicant proposed a technique disclosed in JP-B-6516207. Although this technique is useful, in a state where a filling nozzle and a receptacle are connected, a protrusion formed at a tip of a clutch of the filling nozzle and projecting radially outward and inward becomes unable to move radially inward due to freezing or the like, and if the filling nozzle is fixed in a radially outwardly open state, there is a problem in that the filling nozzle cannot be removed from the receptacle. The document JP6516207 B2 discloses a filling nozzle comprising a pipe joint body provided at a tip of a filling hose

### BRIEF SUMMARY

The present invention has been proposed in view of the problems of the prior art described above, and an object thereof is to provide a filling nozzle that can prevent the protrusion at the tip of the clutch from becoming fixed in a radially outwardly open position.

A filling nozzle 10-1 according to the present invention is characterized by including: a pipe joint body 1 provided at a tip of a filling hose for filling gaseous fuel and connected to a receptacle 20 on a side to be filled with gaseous fuel; and a clutch 4 that extends on an outside of the pipe joint body 1 in a direction in which the pipe joint body 1 and the receptacle 20 are connected (hereinafter referred to as "connection direction") and engages with the receptacle 20, wherein a ring-shaped elastic spacer (15, 15-1, 15-2, 15-3) is fitted into an engagement portion where an end portion 4E of the clutch 4 away from the receptacle 20 is engaged with the pipe joint body 1 such that a portion 4R of the clutch 4 other than the end portion 4E is biased radially inwardly of the filling nozzle 10-1 by the elastic spacer 15, etc., and a shape of the elastic spacer 15, etc. is complementary to a gap or a portion of the gap which is formed when the end portion 4E of the clutch 4 is engaged with the engagement portion where the end portion 4E engages with the pipe joint body 1.

In the filling nozzle 10-1, the engagement portion is composed of an annular recess 1D formed in the pipe joint body 1 and accommodating the end portion 4E of the clutch 4 that is away from the receptacle 20, and the annular recess 1D is connected to an outside of the pipe joint body 1 though a drainage channel 7W. And, a through hole 15W is preferably formed in the elastic spacer (15-1, 15-2), and the through hole 15W preferably communicates with the drainage channel 7W.

Here, an extension portion 15A-1 extending toward the receptacle 20 side is provided radially outward of the elastic spacer (15-1, 15-2), and a radial dimension of the extension portion 15A-1 is preferably set to be the same as or smaller than a radial dimension of the receptacle 20 side portion of the clutch 4.

The elastic spacer 15-3 can be formed in a shape complementary to a radially outer region of the gap.

Further, in the gap which is formed when the end portion 4E of the clutch 4 is engaged with the engagement portion where the end portion 4E engages with the pipe joint body 1, no elastic spacer 15-3 may be filled in an area radially inward from a radially inner end face 4EB of the end portion 4E of the clutch 4; a gap 1DV can be formed; the gap 1DV can be connected to a drainage channel 7W-3 of the pipe joint body 1; and no through hole 15W may be formed in the elastic spacer 15-3.

In addition, a method for manufacturing the elastic spacer 15, etc. in the filling nozzle according to the present invention is characterized by including the steps of: pouring molten rubber or silicone into an engagement portion where the end portion 4E of the clutch 4 away from the receptacle 20 engages with the pipe joint body 1, and removing the rubber or silicone after it has hardened.

### EFFECTS OF THE INVENTION

According to the filling nozzle of the present invention having the above-described configuration, the ring-shaped elastic spacer 15, etc. is fitted into the engagement portion where the end 4E of the clutch 4 away from the receptacle 20 engages with the pipe joint body 1 so that the portion 4R of the clutch 4 other than the end 4E is biased radially inward of the filling nozzle 10-1 by the elastic spacer 15, etc., and the shape of the elastic spacer 15, etc. is complementary to a gap or a part thereof when the end 4E of the clutch 4 engages with the engagement portion where the end 4E of the clutch 4 engages with the pipe joint body 1, so that the elastic spacer 15, etc. exerts a function of filling the engagement portion where the end 4E of the clutch 4 engages with the pipe joint body 1 and prevents moisture and foreign matter from entering the engagement portion. With this, freezing of moisture in the engagement portion is prevented, and a situation where the clutch 4 cannot move radially inward is prevented.

In addition, elastic forces (α, β) of the elastic spacer 15, etc. always act on the end 4E of the clutch 4 that is away from the receptacle 20, and the elastic repulsive forces (α, β) act to move the receptacle side portion 4R of the clutch 4 (a portion other than the dispenser side end of the clutch 4) radially inward. Therefore, even if the base where the clutch 4 is connected to the body 1 freezes, the elastic repulsive forces (α, β) that bias the clutch 4 radially inward as described above assist in the movement of the clutch 4 radially inward, and the clutch 4 is reliably disengaged from the member on the receptacle side.

Furthermore, in the present invention, the engaging portion is configured as the annular recess 1D formed in the pipe joint body 1 and accommodating the end 4E of the clutch 4 on the side away from the receptacle, and the annular recess 1D is connected to the outside of the pipe joint body 1 by the drainage channel 7W, so that even if moisture accumulates in the recess 1D, it can be drained to the outside of the filling nozzles 10-3, 10-4 via the drainage channel 7W. If through holes 15W, 15-2W are also formed in the elastic spacers 15, 15-2 and the through holes 15W, 15-2W are connected to the drainage channel 7W, even if moisture accumulates in the region closer to the receptacle side (the side of the arrow AR) than the elastic spacer 15, the moisture can be drained to the outside of the filling nozzles 10-3, 10-4 via the through hole 15W and the drainage channel 7W. Therefore, the radially inward movement of the clutch 4 is not hindered by freezing of water, and the projection 4B of the clutch 4 comes out of the fitting groove 20A of the receptacle 20, and the filling nozzles 10-3, 10-4 are disconnected from the receptacle 20.

### BRIEF DESCRIPTION OF THE DRAWINGS

[Figure 1] A sectional view showing a pipe joint body of a conventional filling nozzle.
[Figure 2] A cross-sectional view showing a state in which a conventional pipe joint is coupled to a receptacle.
[Figure 3] An enlarged view of a portion F3 in Fig. 2.
[Figure 4] A cross-sectional view showing a filling nozzle according to a modified example of the conventional one.
[Figure 5] A schematic diagram showing a spring of the filling nozzle shown in Fig. 4.
[Figure 6] An enlarged view showing an engagement portion between a clutch and a pipe joint of the conventional filling nozzle, with no elastic spacer fitted.
[Figure 7] An enlarged cross-sectional view showing a main portion of a filling nozzle according to the first embodiment of the present invention, illustrating a state in which an elastic spacer is fitted into a recess which is an engagement portion between a clutch end portion and a pipe joint.
[Figure 8] An enlarged cross-sectional view showing a state in which elastic repulsive forces of the elastic spacer shown in Fig. 7 act.
[Figure 9] An enlarged cross-sectional view showing a main portion of a filling nozzle according to the second embodiment of the present invention, illustrating a state in which an elastic spacer is fitted into a recess which is an engagement portion between a clutch end portion and a pipe joint.
[Figure 10] An enlarged cross-sectional view showing a main portion of a filling nozzle according to the third embodiment of the present invention, illustrating a state in which an elastic spacer is fitted into a recess which is an engagement portion between a clutch end portion and a pipe joint.
[Figure 11] An enlarged cross-sectional view showing a main portion of a filling nozzle according to the fourth embodiment of the present invention, illustrating a state in which an elastic spacer is fitted into a recess which is an engagement portion between a clutch end portion and a pipe joint.
[Figure 12] An enlarged cross-sectional view showing a main portion of a filling nozzle according to the fifth embodiment of the present invention, illustrating a state in which an elastic spacer is fitted into a recess which is an engagement portion between a clutch end portion and a pipe joint.

### DETAILED DESCRIPTION

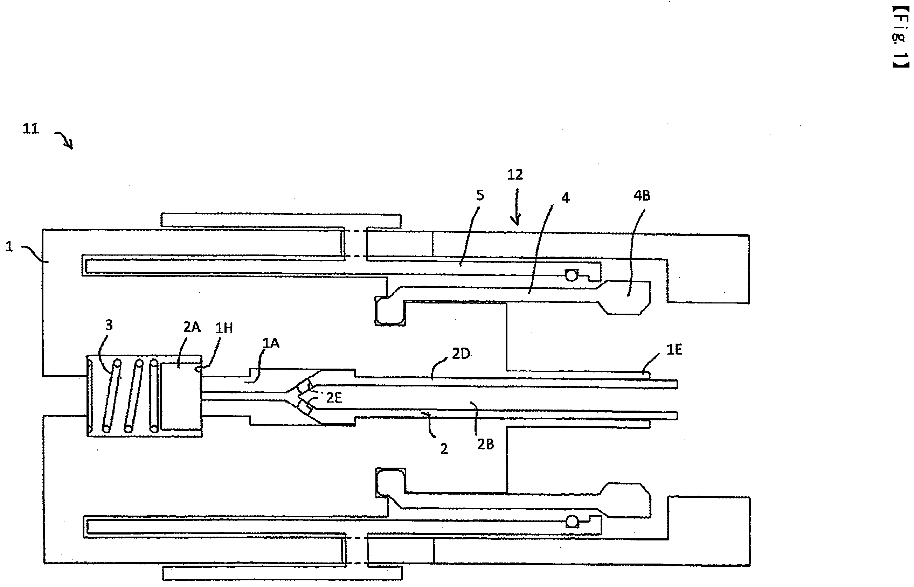

Embodiments of the present invention will be described below with reference to the accompanying drawings. First, in order to understand the present invention, the prior art described in JP-B-6516207 will be explained with reference to Figs. 1 to 3.

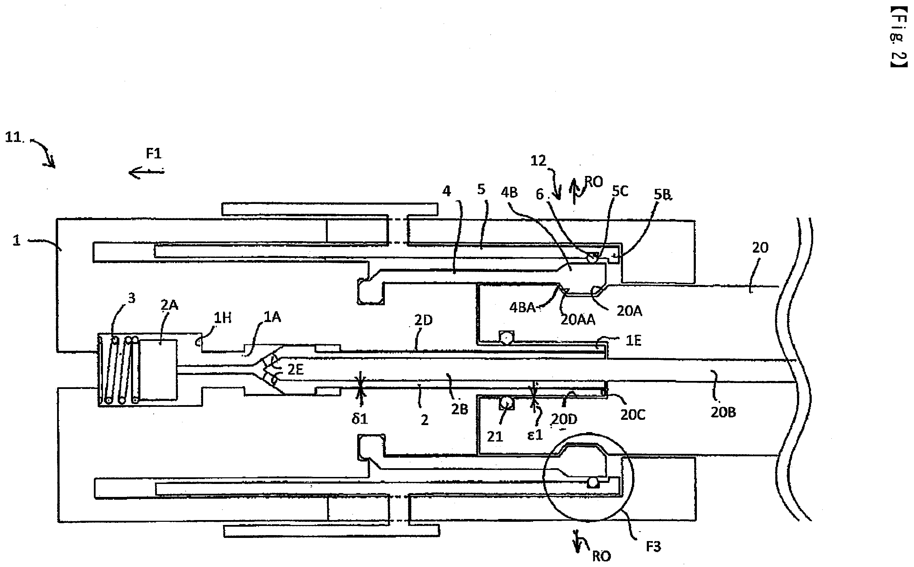

In Figs. 1 and 2, a filling nozzle 11 is provided, for example, at a tip of a filling hose of a fuel filling system that fills hydrogen into a hydrogen filling tank of an FCV, and has a pipe joint body 1, which is connected to a receptacle 20 at filling. A pipe joint flow path 1A is formed in the pipe joint body 1, a rod 2 is slidably disposed in the pipe joint flow path 1A, and a valve seat 1H is formed. A valve body 2A is provided at an end of the rod 2, and is seated on the valve seat 1H. An elastic member 3 that urges the valve body 2A toward the valve seat 1H is disposed in the pipe joint flow path 1A. The filling nozzle 11 is provided with a clutch mechanism 12 that maintains a connected state between the filling nozzle 11 and the receptacle 20, and the clutch mechanism 12 is provided with a clutch 4 that engages with the receptacle 20. The clutch 4 extends in the nozzle longitudinal direction, and a groove is formed in the center of the clutch 4 in the nozzle longitudinal direction or in its vicinity, and an elastic body (e.g., a spring) is disposed in the groove, and the elastic body biases the clutch 4 radially inward of the filling nozzle 11.

As shown in Fig. 2, when the pipe joint body 1 and the receptacle 20 are connected, a hydrogen gas flows through the pipe joint flow path 1A, the rod flow path 2B, or flows through a gap δ1 between an outer circumferential surface of a rod large diameter portion 2D and an inner peripheral surface of the joint flow path 1A, reaches a bottom 20C of a receptacle fitting recess, and flows through the receptacle flow path 20B. A hydrogen gas flowing from the bottom 20C of the receptacle fitting recess through a gap ε1 between an inner wall surface 20D of the receptacle fitting recess and an outer peripheral surface of a pipe joint central projection 1E is sealed by an O-ring 21 provided on the inner peripheral surface 20D.

In Fig. 2, the clutch mechanism 12 has a function of holding a receptacle side end of the lever 5 at a position radially outward of the clutch 4 and preventing a protrusion 4B of the clutch 4 from coming off from a fitting groove 20A of the receptacle 20. The clutch mechanism 12 includes a protrusion 5B provided at an end of the lever 5 on the receptacle side (right side in Figs. 1 and 2) so as to protrude radially inward, and a ring-shaped elastic member 6 (for example, an O-ring) provided on a side (left side in Figs. 1 and 2) farther from the receptacle 20 than the protrusion 5B. The ring-shaped elastic member 6 fits into an elastic body groove 5C formed near the receptacle side end of the lever 5.

As shown in Fig. 2, when the pipe joint body 1 and the receptacle 20 are connected, the valve body 2A at a tip of the rod 2 is separated from the valve seat 1H, and a hydrogen gas flows into the pipe joint flow path 1A, and flows through the rod flow path 2B and the receptacle flow path 20B. At this time, the hydrogen gas is at a very high pressure (for example, 70 MPa), and this pressure causes a tensile force F1 (Fig. 2) that tries to peel off the pipe joint body 1 from the receptacle 20. As a result of the tensile force F1 acting on the pipe joint body 1, a slope 4BA of the protrusion 4B of the clutch 4 on the side away from the receptacle 20 (the left side in Fig. 2) contacts a slope 20AA of the receptacle fitting groove 20A away from the receptacle 20, which causes a radially outward force RO, as a component of the tensile force F1, to act on the clutch 4, and this force RO moves the clutch 4 radially outward.

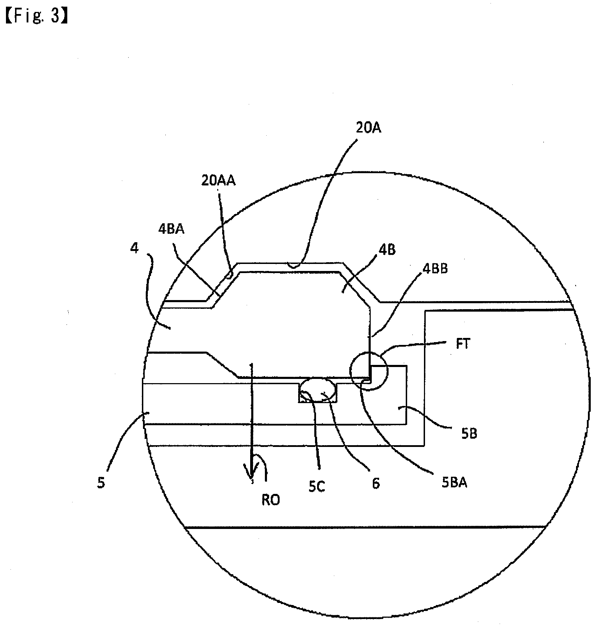

As shown in Fig. 3, which is an enlarged view of a portion F3 in Fig. 2, when the clutch 4 moves radially outward due to the radially outward force RO, the ring-shaped elastic body 6 becomes collapsed in the radial direction. As a result, the end surface 4BB of the protrusion 4B of the clutch 4 and the end surface 5BA of the protrusion 5B of the lever 5 are joined in a region FT. With this, the lever 5 cannot move away from the receptacle 20 from the state shown in Fig. 3 (leftward in Figs. 2 and 3). Since the lever 5 continues to be located radially outward of the protrusion 4B of the clutch 4, the lever 5 cannot move radially outward. As a result, the protrusion 4B of the clutch 4 does not come off the fitting groove 20A of the receptacle 20, and the connection between the pipe joint body 1 and the receptacle 20 is prevented from being disconnected.

In Figs. 2 and 3, when filling with hydrogen gas is completed and predetermined depressurization work is completed, the tensile force F1 due to the high pressure of hydrogen gas disappears. Along with this, the radially outward force RO acting on the clutch 4 also disappears, and the ring-shaped elastic member 6 returns to the state with a circular cross section from the collapsed state shown in Fig. 3. With this, the clutch 4 returns to its radially inward position (the position before hydrogen gas filling), the end surface 4BB and the end surface 5BA have different relative positions in the radial direction (vertical positions in Fig. 3), and are not in a state like the region FT in Fig. 3. Therefore, unlike the state shown in Fig. 3, the lever 5 is movable in the direction away from the receptacle 20 (leftward in Figs. 2 and 3). If the lever 5 is moved in the direction away from the receptacle 20 (to the left in Figs. 2 and 3), the lever 5 will not be located radially outward of the clutch 4, and the protrusion 4B can deviate from the fitting groove 20A of the receptacle 20. Then, the connection between the pipe joint body 1 and the receptacle 20 can be released.

The invention described in JP-B-6516207 with reference to Figs. 1 to 3 is a useful technique. However, if for some reason the connection between the end surface 4BB of the protrusion 4B of the clutch 4 and the end surface 5BA of the protrusion 5B of the lever 5 is not released, even if the hydrogen filling is completed and the radially outward force RO disappears, the lever 5 cannot be moved in the direction away from the receptacle 20 (leftward in Figs. 2 and 3), and the nozzle 11 cannot be removed from the receptacle 20.

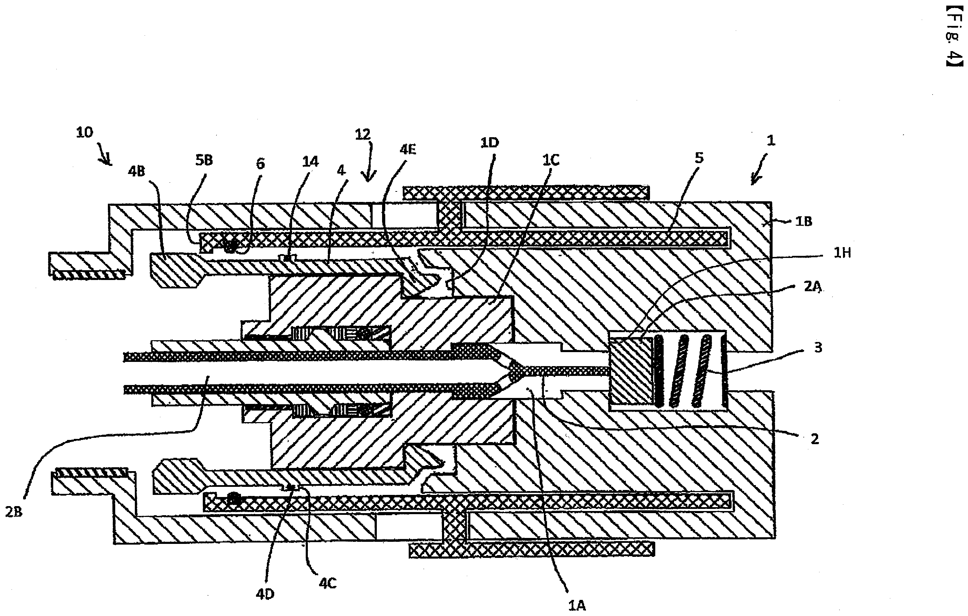

In contrast, in the filling nozzle 10 of the modified example shown in Fig. 4, the nozzle 10 can be reliably removed from the receptacle 20 once hydrogen filling is completed and the radially outward force RO disappears. In Fig. 4, a spring (elastic body) 14 is disposed at or near the center of the clutch 4 in the longitudinal direction of the nozzle, and the spring 14 urges the clutch 4 inward in the radial direction of the nozzle 10. The structure of the portion where the clutch base portion 4E engages with the distal end portion 1C of the pipe joint body 1 is different in the modified example shown in Fig. 4 from that in Figs. 1 to 3. Although the receptacle 20 is not shown in Figs. 4, 6 and 9, the structure on the receptacle side is the same as in Figs. 1 to 3. In Figs. 4, 6 and 9, the left side is the receptacle side. When explaining with reference to Fig. 4, parts similar to those in Figs. 1 to 3 are given the same reference numerals as in Figs. 1 to 3, and redundant explanation will not be given. In the following, points different from those in Figs. 1 to 3 will be mainly explained.

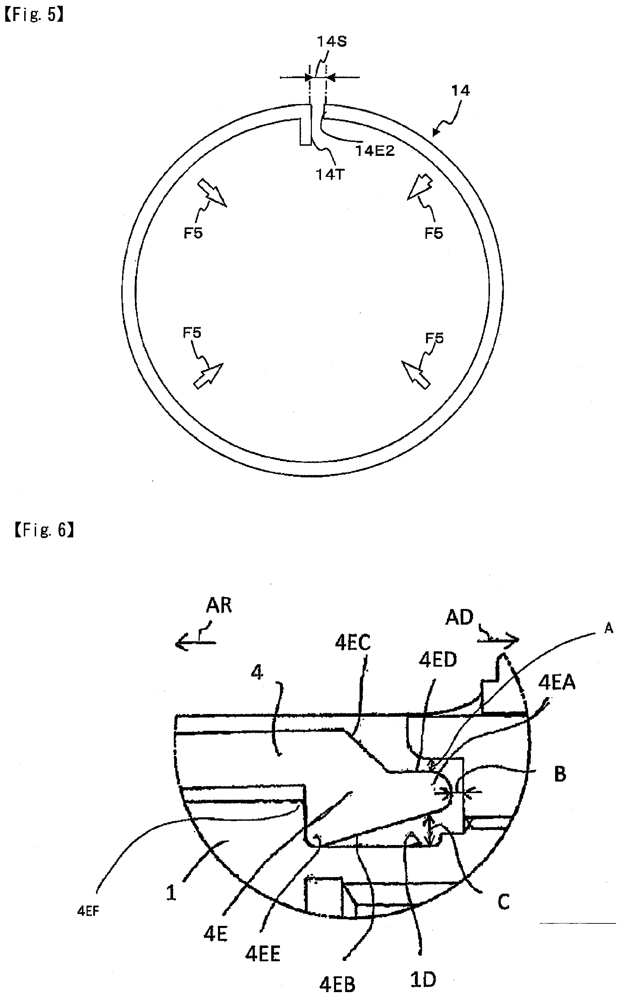

In Fig. 4, a convex portion 4C is formed near the center of the clutch 4 in the longitudinal direction of the filling nozzle. A groove 4D is formed radially outward of the convex portion 4C. The spring 14, which is an elastic body, is arranged in the groove 4D. The spring 14 is formed by connecting tension coil springs in an annular shape, for example as shown in Fig. 5. When the spring 14 is disposed in the groove 4D (see Fig. 4), it contracts radially inward due to its elastic force. This contraction force acts from the spring 14 on the bottom of the groove 4D, and acts in the direction indicated by arrows F5. The clutch 4 is urged inward in the radial direction of the nozzle 10 by elastic repulsive forces (the arrows F5) by the spring 14.

In Fig. 5, a locking portion 14T that protrudes inward in the radial direction of the clutch 4 is provided at an end of the spring 14, and a hole (not shown) is formed at the bottom of the groove 4D. Locking the locking portion 14T in the hole at the bottom of the groove 4D allows the spring 14 to be prevented from rotating in the circumferential direction. Further, a gap 14S is formed between an end where the locking portion 14T is provided and the other end 14E2, so that even if the spring 14 is urged inward in the radial direction by an unexpected external force, the damage is prevented by the gap 14S. Although not shown, the spring 14 may be a tension coil spring connected in an annular shape.

As shown in Fig. 4, the pipe joint body 1 includes a base 1B and a tip 1C, and a clutch base portion 4E (dispenser side end of the clutch 4: right end in Fig. 4) engages with the tip 1C at a concave portion 1D. Details of the engagement portion between the annular recess 1D of the pipe joint body 1 and the clutch base portion 4E are shown in Fig. 6. In Fig. 6, the receptacle side is indicated by an arrow AR, and the dispenser side is indicated by an arrow AD. The clutch base portion 4E of the clutch 4 is offset radially inward (downward in Fig. 6) compared to other parts of the clutch 4. In the clutch base portion 4E, a portion on the AR side is an engaging portion 4EE, and the engaging portion 4EE is engaged with the pipe joint body 1. Further, an endmost portion 4EA located closest to the AD side is located radially outward (upper in Fig. 6) compared to the engaging portion 4EE. In the clutch base portion 4E, a radially inner end surface 4EB forms an inclined surface facing radially outward (upward in Fig. 6) toward the AD side. A radially outer end surface of the clutch base portion 4E has an inclined surface 4EC and a flat surface 4ED.

At the clutch base portion 4E, the flat surface 4ED is movable by the length shown by an arrow A, the outermost end 4EA is movable by the length shown by an arrow B, and the radially inner end surface 4EB is movable by a length indicated by an arrow C with respect to the pipe joint body 1. As described above with reference to Fig. 4, the clutch 4 is radially inwardly biased by the elastic repulsive force of the spring 14, and the clutch 4 is not supported anywhere on the receptacle side (the arrow AR side in Fig. 6). Therefore, at the engagement point (recess 1D: see Fig. 4) where the clutch base portion 4E is engaged with the pipe joint body tip 1C, urging the clutch 4 inward in the radial direction of the nozzle 10 by the elastic repulsive force of the spring 14 is not impeded.

When hydrogen filling is completed and the radially outward force RO (Figs. 2 and 3) disappears, the tip of the clutch 4 moves radially inward due to the elastic repulsive force of the spring 14, and the coupling between the end surface 4BB of the protrusion 4B of the clutch 4 and the end surface 5BA of the protrusion 5B of the lever 5 is released, and the lever 5 can be moved in a direction away from the receptacle 20 (leftward in Figs. 2 and 3). As a result, in the filling nozzle 10 of the modified example shown in Fig. 4, for some reason, even if the end surface 4BB of the protrusion 4B (see Figs. 2 and 3) and the end surface 5BA of the protrusion 5B (see Figs. 2 and 3) becomes difficult to release, the protrusion 4B of the clutch 4 can be removed from the fitting groove 20A of the receptacle 20, and the filling nozzle 10 can be disconnected from the receptacle 20. In addition, in the modified example shown in Fig. 4, the configuration in which the clutch base portion 4E engages with the recess 1D of the pipe joint body 1 is not limited to that shown in Fig. 6. For example, it is also possible to adopt the configuration shown in Figs. 1 and 2 (the configuration described in JP-B-6516207 gazette).

In the modified example shown in Fig. 4, for example, when moisture contained in the air that has entered the filling nozzle 10 is cooled by low temperature hydrogen gas, it freezes and connects the clutch 4 and its surrounding nozzle parts, or the spring 14 freezes and is bound with the radially outer members of the clutch 4. For example, when the pipe joint body 1 of the filling nozzle 10 is connected to the receptacle 20, if the water accumulated in the annular groove 1D freezes, the elastic repulsive force of the spring 14 makes it impossible for the clutch 4 to move inward in the radial direction, thereby connecting the filling nozzle 10 from the receptacle 20 will no longer be possible to release it. In the modified example shown in Fig. 4, it is difficult to prevent such inconveniences caused by freezing.

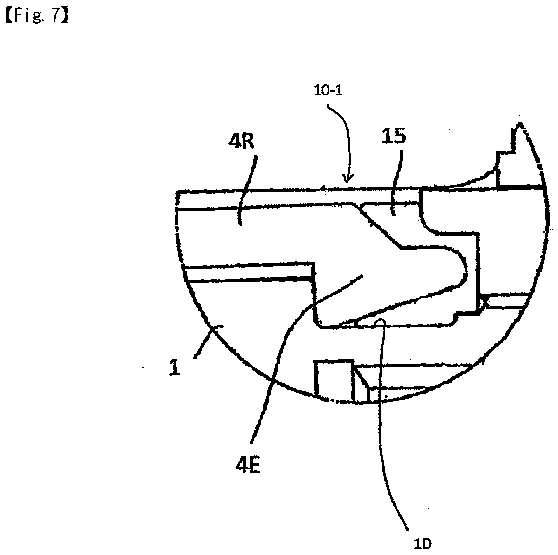

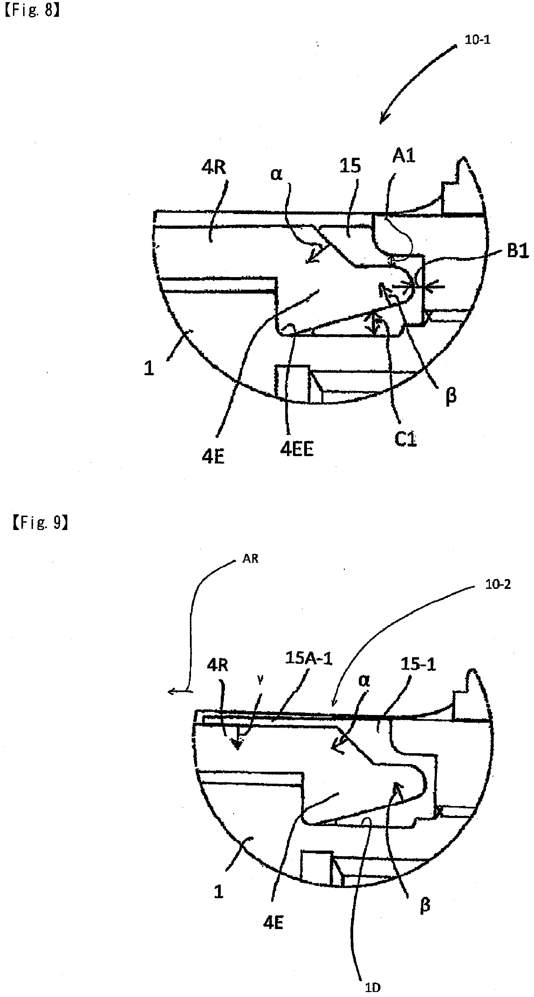

This disadvantage is overcome by the first to fifth embodiments of the present invention. The first embodiment will be described with reference to Figs. 7 and 8. In Fig. 7, in the filling nozzle 10-1 according to the first embodiment, an elastic spacer 15 having a generally U-shaped cross section and a ring shape is fitted in the area in the recess 1D where the clutch base portion 4E does not exist. This elastic spacer 15 has a shape complementary to the gap in the recess 1D, that is, the area where the clutch base portion 4E does not exist. In other words, the elastic spacer 15 fills the gap. If the elastic spacer 15 is provided, there will be no gap in the recess 1D, and moisture or foreign matter will not penetrate. If there is no moisture, the vicinity of the clutch base portion 4E will not freeze even if the low temperature of the hydrogen to be filled acts, and the radial inward movement of the clutch 4 will not be hindered.

With reference to Fig. 8, various dimensions and functions of the elastic spacer 15 shown in Fig. 7 will be described. In Fig. 8, the thickness C1 of the radially inward protruding portion of the elastic spacer 15 is set to be larger than the length indicated by the arrow C in Fig. 6 (the length over which the radially inward end face 4EE of the clutch base portion 4E can move radially in the recess 1D). The longitudinal thickness B1 (Fig. 8) of the elastic spacer 15 is set to be larger than the length indicated by the arrow B in Fig. 6 (the length over which the end 4E can move longitudinally in the recess 1D). The thickness A1 (Fig. 8) of the radially outward protruding portion of the elastic spacer 15 is set to be larger than the length indicated by the arrow A in Fig. 6 (the length over which the radially outward end face 4ED of the end 4E can move radially in the recess 1D). Setting the thicknesses A1 to C1 (Fig. 8) of each portion of the elastic spacer 15 as described above allows the rubber elastic spacer 15 to be fit tightly into the recess 1D (engagement portion) that engages with the end 4E (dispenser side end) of the clutch 4. Therefore, elastic forces as shown by arrows α and β in Fig. 8 always act on the dispenser side end 4E of the clutch 4.

Here, the elastic force α is a force directed radially inward, and acts to move the receptacle side portion 4R of the clutch 4 (portion other than the dispenser side end 4E of the clutch 4) radially inward. On the other hand, the elastic force β is directed radially outward. Here, the clutch base portion 4E abuts against the pipe joint body 1 at the abutment portion 4EE, whose engagement portion is located at the radially innermost position, so when the elastic force β acts, a force acts to move the receptacle side portion 4R of the clutch 4 (portion other than the dispenser side end 4E of the clutch 4) radially inward, with the abutment portion 4EE as the center of rotation.

As described above with reference to Fig. 8, the elastic forces α and β of the elastic spacer 15 always urge the portions other than the clutch base portion 4E radially inward, so that the spring 14 shown in the modified example of Figs. 4 and 5 can be omitted in the filling nozzle 10-1 of the first embodiment shown in Figs. 7 and 8. However, although not shown, it is also possible to provide the spring 14 in the filling nozzle 10-1 according to the first embodiment. The other configurations and effects of the first embodiment in Figs. 7 and 8 are the same as those of the modified examples in Figs. 4 to 6.

Next, the second embodiment of the present invention will be described with reference to Fig. 9. In Fig. 9, an elastic spacer 15-1 used in a filling nozzle 10-2 according to the second embodiment is provided with an extension 15A-1 extending radially outward toward the receptacle side, and the longitudinal dimension (left-right dimension in Fig. 9) of the radially outer portion of the elastic spacer 15-1 of the second embodiment is longer than the radially outer portion of the elastic spacer 15 of the first embodiment. In Fig. 9, the inner diameter of the extension 15A-1 is set to be the same as or slightly smaller than the outer diameter of the receptacle side portion 4R of the clutch 4. Therefore, the extension 15A-1 of the elastic spacer 15-1 always applies a radially inward elastic force γ to the clutch 4. In addition, the extension 15A-1 more reliably prevents water from entering the recess 1D, and prevents the portion from freezing. The second embodiment of Fig. 9 can also be provided with the spring 14 shown in Figs. 4 and 5, as in the first embodiment of Figs. 7 and 8. Other configurations and functions and effects of the second embodiment in Fig. 9 are similar to those of the first embodiment in Figs 7 and 8.

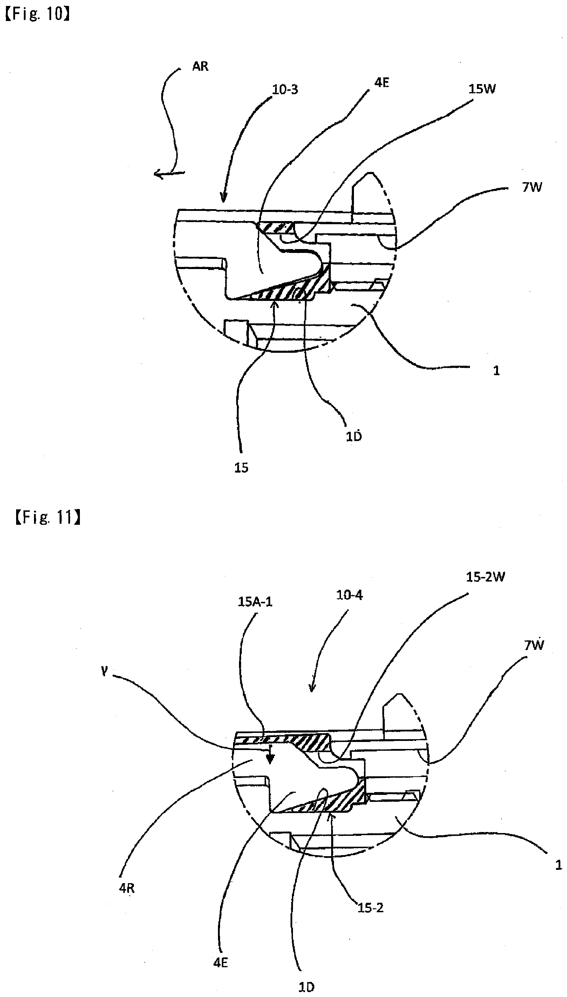

The third embodiment of the present invention will be described with reference to Fig. 10. The third embodiment of Fig. 10 has a similar configuration to the first embodiment of Figs. 7 and 8, but in Fig. 10, a drainage channel 7W is formed in the body 1 with a pipe, and the drainage channel 7W communicates with the recess 1D. In that respect, it differs from Fig. 7 and Fig. 8. Although not clearly shown in Fig. 10, the drainage channel 7W penetrates the pipe joint body 1 and communicates with a drainage port (not shown) provided at the boundary between the grip of the filling nozzle 10-3 and the filling hose, and water flowing through the drainage channel 7W is drained to the outside of the filling nozzle 10-3 from the drainage port (not shown). However, it is possible to provide the drainage port at a location other than the boundary between the grip of the filling nozzle 10-3 and the filling hose.

In the third embodiment of Fig. 10, a through hole 15W is also formed in the elastic spacer 15, and the through hole 15W is in communication with the drainage channel 7W. As a result, even if moisture accumulates in the area on the arrow AR side (receptacle side) of the elastic spacer 15, the moisture can be discharged to the outside of the filling nozzle 10-3. In the third embodiment of Fig. 10, even if moisture accumulates in the annular recess 1D, the accumulated moisture is discharged to the outside of the filling nozzle 10-3 through the drainage channel 7W, so that the annular recess 1D is prevented from freezing. Therefore, the elastic force of the elastic spacer 15 (and the elastic force of the spring 14) causes the clutch 4 to move radially inward, and the protrusion 4B of the clutch 4 is disengaged from the fitting groove 20A (Figs. 2 and 3) of the receptacle 20, and the filling nozzle 10-1 is disconnected from the receptacle 20.

Next, the fourth embodiment of the present invention will be described with reference to Fig. 11. In the fourth embodiment of Fig. 11, the longitudinal dimension of the radially outer portion of the elastic spacer 15-2 is longer than the longitudinal dimension of the radially inner portion, as in the second embodiment of Fig. 9. As in the third embodiment of Fig. 10, a drainage channel 7W is formed through the pipe joint body 1, and a through hole 15-2W is also formed in the elastic spacer 15-2, and the through hole 15-2W is in communication with the drainage channel 7W. The drainage channel 7W is in communication with a drainage port (not shown) provided at the boundary between the grip and the filling hose of the filling nozzle 10-4 according to the fourth embodiment, and is drained to the outside of the filling nozzle 10-3 from the drainage port. However, it is possible to provide the drainage port at a location other than the boundary between the grip and the filling hose of the filling nozzle 10-3. Other configurations and effects of the fourth embodiment in Fig. 11 are similar to those of the embodiments in Figs. 9 and 10.

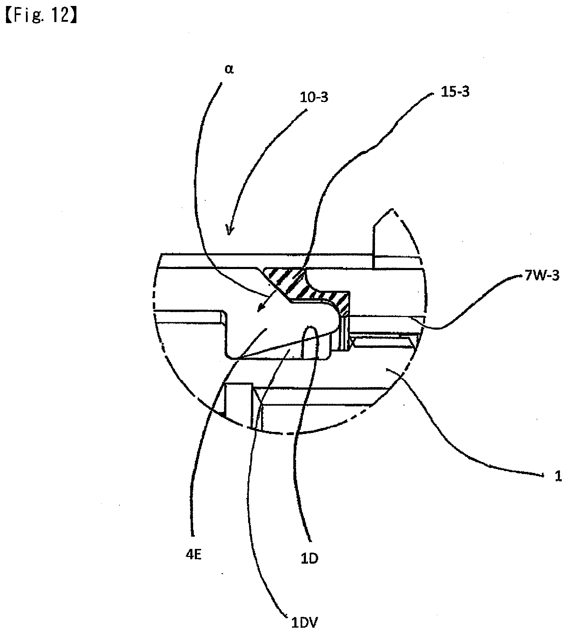

The fifth embodiment of the present invention will be described with reference to Fig. 12. In Fig. 12 also, the clutch end 4E is engaged with the recess 1D of the pipe joint body 1. The elastic spacer 15-3 is filled into the gap of the recess 1D. However, the elastic spacer 15-3 shown in Fig. 12 is filled only in the area radially outward from the inclined surface 4EC and the flat surface 4ED (see Fig. 6) of the clutch base portion 4E, and the elastic spacer 15-3 is not filled in the area radially inward from the radially inner end face 4EB (see Fig. 6), forming a gap 1DV. The drainage channel 7W-3 of the pipe joint body 1 is connected to the gap 1DV. Therefore, the drainage channel 7W-3 in Fig. 12 is located radially inward of the pipe joint body 1 (lower in Figs. 7, 10 and 12) compared to the drainage channel 7W shown in Fig. 10 and Fig. 11. In the fifth embodiment of Fig. 12, if water accumulates in the recess 1D, it is because it is a radially inward region (void portion) that is not filled with the elastic spacer 15-3.

The elastic spacer 15-3 shown in Fig. 12 exists only in the radially outer region (upper region in Figs. 7 to 12) of the elastic spacer shown in Figs. 7 to 11. The drainage channel 7W-3 is connected to the radially inner gap in Fig. 12. The elastic spacer 15-3 does not have a through hole. The elastic force indicated by the arrow α in Fig. 12 is the same as the elastic force indicated by the arrow α in Fig. 8, and biases the clutch 4 radially inward. However, the fifth embodiment in Fig. 12 can also include the spring 14 shown in Figs. 4 and 5, as in the embodiment in Figs. 4 to 11. The other configurations and effects of the fifth embodiment in Fig. 12 are the same as those of the embodiment in Figs. 4 to 11.

In the illustrated embodiment, the material of the elastic spacers 15, 15-1 is preferably an elastic body such as rubber or resin. When using a foam, closed-cell rubber is preferable. Furthermore, open-cell structure is not suitable as a material for the elastic spacers 15, 15-1 because water may penetrate into the open-cell structure. However, if the clutch only needs to be biased radially inward, open-cell rubber may be used. In the illustrated embodiment, silicon may be used instead of closed-cell rubber or open-cell rubber. When manufacturing such an elastic spacer, it is possible to substitute it by pouring molten rubber or silicon into the space of the engagement part where the end 4 (dispenser side end) of the clutch 4 engages with the pipe joint body 1. After the poured rubber or silicon hardens, the hardened rubber or silicon is taken out to manufacture the elastic spacers 15, 15-1. However, when the rubber or silicon poured into the space in the engagement portion hardens, it acts as the elastic spacers 15, 15-1, so it is possible to fill it as it is as the elastic spacers 15, 15-1 without removing it.

It is necessary to take into consideration the composition and characteristics of the rubber or silicone to be poured in while taking into account the above-mentioned conditions for the dimensions of the elastic spacers 15, 15-1 (for example, dimensions A1 to C1, etc. in Fig. 8). When the elastic spacers 15, 15-1 are manufactured using this method, a release agent must be used to remove the elastic spacer 15 manufactured by pouring in silicone when disassembling the filling nozzle 10-1 for maintenance, etc.

It should be noted that the illustrated embodiment is merely an example and is not intended to limit the technical scope of the present invention.

### [Explanation of symbols]

1 pipe joint body
1A pipe joint flow path
1H valve seat
2 rod
2A valve body
3 elastic member
4 clutch
5 lever
7W, 7W-3 drainage channels (of pipe joint body 1)
10, 10-1, 10-2, 10-3 filling nozzles
12 clutch mechanism
14 spring (elastic body)
15, 15-1, 15-3 elastic spacers
15A-1 extension portion of elastic spacer
15W, 15-2W through holes
20 receptacle (vehicle filling port)

## Claims

1. A filling nozzle (10) comprising:
a pipe joint body (1) to be provided at a tip of a filling hose for filling gaseous fuel and connectable to a receptacle (20) on a side to be filled with gaseous fuel; and
a clutch (4) that extends on an outside of the pipe joint body (1) in a direction in which the pipe joint body (1) and the receptacle (20) are connected and is configured to engage with the receptacle (20),
**characterized in that** a ring-shaped elastic spacer (15) is fitted into an engagement portion where an end portion of the clutch (4) away from the receptacle (20) is engaged with the pipe joint body (1) such that a portion of the clutch (4) other than the end portion is biased radially inwardly of the filling nozzle (10) by the elastic spacer (15), and
a shape of the elastic spacer (15) is complementary to a gap or a portion of the gap when the end portion of the clutch (4) is engaged with the engagement portion where the end portion engages with the pipe joint body (1).

2. The filling nozzle (10) as claimed in claim 1, wherein the engagement portion is composed of an annular recess (1D) formed in the pipe joint body (1) and accommodating the end portion of the clutch (4) that is away from the receptacle (20), and the annular recess (1D) is connected to an outside of the pipe joint body (1) by a drainage channel.

3. The filling nozzle (10) as claimed in claim 2, wherein a through hole is formed in the elastic spacer (15), and the through hole communicates with the drainage channel.

4. The filling nozzle (10) as claimed in claim 1, 2 or 3, wherein an extension portion extending toward the receptacle (20) side is provided radially outward of the elastic spacer (15), and a radial dimension of the extension portion is set to be the same as or smaller than a radial dimension of the receptacle side portion of the clutch (4).

5. The filling nozzle (10) as claimed in claim 1, 2 or 3, wherein the elastic spacer (15) is formed in a shape complementary to a radially outer region of the gap.

6. The filling nozzle (10) as claimed in claim 5, wherein when the end portion of the clutch (4) is engaged with the engagement portion where the end portion engages with the pipe joint body (1), a gap is formed in an area radially inward from a radially inner end face of the end portion of the clutch (4) in which no elastic spacer (15) is filled, the gap is connected to the drainage channel of the pipe joint body (1), and no through hole is formed in the elastic spacer (15).

7. A method for manufacturing the elastic spacer (15) in the filling nozzle (10) according to claim 1, said method comprising the steps of:
pouring molten rubber or silicone into an engagement portion where the end portion of the clutch (4) away from the receptacle (20) engages with the pipe joint body (1), and removing the rubber or silicone after it has hardened.

## Patentansprüche

1. Füllstutzen (10), umfassend:
einen Rohrverbindungskörper (1), der an einem Ende eines Füllschlauchs zum Einfüllen von gasförmigem Kraftstoff bereitzustellen ist und mit einem Behältnis (20) auf einer Seite, die mit gasförmigem Kraftstoff befüllt werden soll, verbindbar ist; und
eine Kupplung (4), die sich an einer Außenseite des Rohrverbindungskörpers (1) in einer Richtung erstreckt, in der der Rohrverbindungskörper (1) und das Behältnis (20) verbunden sind, und die dazu eingerichtet ist, mit dem Behältnis (20) in Eingriff zu gelangen,
**dadurch gekennzeichnet, dass** ein ringförmiger elastischer Abstandhalter (15) in einen Eingriffnahmeabschnitt eingepasst ist, wo ein von dem Behältnis (20) entfernt angeordneter Endabschnitt der Kupplung (4) mit dem Rohrverbindungselement (1) so in Eingriff steht, dass ein anderer Abschnitt der Kupplung (4) als der Endabschnitt durch den elastischen Abstandhalter (15) radial einwärts des Füllstutzens (10) vorgespannt ist, und
dass eine Form des elastischen Abstandshalters (15) komplementär zu einem Spalt oder einem Abschnitt des Spalts ist, wenn der Endabschnitt der Kupplung (4) mit dem Eingriffnahmeabschnitt im Eingriff steht, wo der Endabschnitt mit dem Rohrverbindungskörper (1) im Eingriff steht.

2. Füllstutzen (10) nach Anspruch 1, wobei der Eingriffnahmeabschnitt von einer ringförmigen Aussparung (1D) gebildet ist, die in dem Rohrverbindungskörper (1) gebildet ist und den von dem Behältnis (20) entfernt liegenden Endabschnitt der Kupplung (4) aufnimmt, und die ringförmige Aussparung (1D) über einen Abflusskanal mit einer Außenseite des Rohrverbindungskörpers (1) verbunden ist.

3. Füllstutzen (10) nach Anspruch 2, wobei in dem elastischen Abstandhalter (15) ein Durchgangsloch gebildet ist und das Durchgangsloch mit dem Abflusskanal in in kommuniziert.

4. Füllstutzen (10) nach Anspruch 1, 2 oder 3, wobei ein Erstreckungsabschnitt, der sich in Richtung der Seite des Behältnisses (20) erstreckt, radial auswärts des elastischen Abstandhalters (15) bereitgestellt ist und eine radiale Abmessung des Erstreckungsabschnitts so eingerichtet ist, dass sie die gleiche ist wie, oder kleiner ist als, eine radiale Abmessung des behältnisseitigen Abschnitts der Kupplung (4).

5. Füllstutzen (10) nach Anspruch 1, 2 oder 3, wobei der elastische Abstandhalter (15) in einer Form gebildet ist, die zu einer radial äußeren Region des Spalts komplementär ist.

6. Füllstutzen (10) nach Anspruch 5, wobei, wenn der Endabschnitt der Kupplung (4) mit dem Eingriffnahmeabschnitt im Eingriff steht, wo der Endabschnitt mit dem Rohrverbindungskörper (1) in Eingriff gelangt, in einem Bereich radial einwärts von einer radial inneren Endfläche des Endabschnitts der Kupplung (4), in den kein elastischer Abstandhalter (15) eingepasst ist, ein Spalt gebildet ist, der Spalt mit dem Abflusskanal des Rohrverbindungskörpers (1) verbunden ist und in dem elastischen Abstandhalter (15) kein Durchgangsloch gebildet ist.

7. Verfahren zum Herstellen des elastischen Abstandshalters (15) in dem Füllstutzen (10) nach Anspruch 1, wobei das Verfahren die folgenden Schritte umfasst:
Gießen von geschmolzenem Gummi oder Silikon in einen Eingriffnahmeabschnitt, wo der von dem Behältnis (20) entfernt liegende Endabschnitt der Kupplung (4) mit dem Rohrverbindungskörper (1) in Eingriff gelangt, und Entfernen des Gummis oder Silikons, nachdem es ausgehärtet ist.

## Revendications

1. Buse de remplissage (10) comprenant :
un corps de raccord de tuyau (1) à placer au niveau d'une extrémité d'un flexible de remplissage pour distribuer du carburant gazeux et pouvant être raccordé à un réceptacle (20) sur un côté à remplir avec du carburant gazeux ; et
une griffe (4) qui s'étend sur un extérieur du corps de raccord de tuyau (1) dans une direction dans laquelle le corps de raccord de tuyau (1) et le réceptacle (20) sont raccordés et est configurée pour venir en prise avec le réceptacle (20),
**caractérisée en ce qu'**un espaceur élastique de forme annulaire (15) est ajusté dans une partie de mise en prise où une partie d'extrémité de la griffe (4) éloignée du réceptacle (20) est mise en prise avec le corps de raccord de tuyau (1) de manière qu'une partie de la griffe (4) autre que la partie d'extrémité soit sollicitée radialement vers l'intérieur de la buse de remplissage (10) par l'espaceur élastique (15), et
qu'une forme de l'espaceur élastique (15) est complémentaire à un espace ou à une partie de l'espace lorsque la partie d'extrémité de la griffe (4) est mise en prise avec la partie de mise en prise où la partie d'extrémité vient en prise avec le corps de raccord de tuyau (1).

2. Buse de remplissage (10) selon la revendication 1, dans laquelle la partie de mise en prise est composée d'un évidement annulaire (1D) formé dans le corps de raccord de tuyau (1) et reçoit la partie d'extrémité de la griffe (4) qui est éloignée du réceptacle (20), et l'évidement annulaire (1D) est relié à un extérieur du corps de raccord de tuyau (1) par un canal de drainage.

3. Buse de remplissage (10) selon la revendication 2, dans laquelle un trou traversant est formé dans l'espaceur élastique (15), et le trou traversant communique avec le canal de drainage.

4. Buse de remplissage (10) selon la revendication 1, 2 ou 3, dans laquelle une partie d'extension s'étendant vers le côté réceptacle (20) est prévue radialement vers l'extérieur de l'espaceur élastique (15), et une dimension radiale de la partie d'extension est prévue pour être identique ou inférieure à une dimension radiale de la partie côté réceptacle de la griffe (4).

5. Buse de remplissage (10) selon la revendication 1, 2 ou 3, dans laquelle l'espaceur élastique (15) a une forme qui est complémentaire à une région radialement extérieure de l'espace.

6. Buse de remplissage (10) selon la revendication 5, dans laquelle lorsque la partie d'extrémité de la griffe (4) est mise en prise avec la partie de mise en prise où la partie d'extrémité vient en prise avec le corps de raccord de tuyau (1), un espace est formé dans une zone radialement vers l'intérieur par rapport à une face d'extrémité radialement intérieure de la partie d'extrémité de la griffe (4) dans laquelle aucun espaceur élastique (15) n'est présent, l'espace est relié au canal de drainage du corps de raccord de tuyau (1), et aucun trou traversant n'est formé dans l'espaceur élastique (15).

7. Procédé de fabrication de l'espaceur élastique (15) dans la buse de remplissage (10) selon la revendication 1, ledit procédé comprenant les étapes consistant à :
verser du caoutchouc ou du silicone fondu dans une partie de mise en prise où la partie d'extrémité de la griffe (4) éloignée du réceptacle (20) vient en prise avec le corps de raccord de tuyau (1), et retirer le caoutchouc ou le silicone une fois qu'il a durci.
